(19) Europäisches Patentamt
European Patent Office
Office européen des brevets

(11) **EP 4 598 718 B1**

(12) **EUROPEAN PATENT SPECIFICATION**

(45) Date of publication and mention of the grant of the patent:
**12.08.2026 Bulletin 2026/33**

(21) Application number: **23789334.2**

(22) Date of filing: **03.10.2023**

(51) International Patent Classification (IPC):
***B27N 1/02*** $^{(2006.01)}$ ***B27N 3/00*** $^{(2006.01)}$
***B27N 3/02*** $^{(2006.01)}$ ***B27N 5/00*** $^{(2006.01)}$

(52) Cooperative Patent Classification (CPC):
**B27N 1/0209; B27N 1/02; B27N 3/002; B27N 3/02; B27N 5/00**

(86) International application number:
**PCT/FI2023/050562**

(87) International publication number:
**WO 2024/074761 (11.04.2024 Gazette 2024/15)**

(54) **A BIO-BASED COMPOSITE MATERIAL AND A BIO-BASED COMPOSITE**

BIOBASIERTES MATERIAL UND BIOBASIERTER VERBUNDSTOFF

MATÉRIAU COMPOSITE D’ORIGINE BIOLOGIQUE ET COMPOSITE D’ORIGINE BIOLOGIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.10.2022 FI 20225907**

(43) Date of publication of application:
**13.08.2025 Bulletin 2025/33**

(73) Proprietor: **UPM-Kymmene Corporation**
**00100 Helsinki (FI)**

(72) Inventors:
- **SUOMELA-UOTILA, Heidi**
**00100 Helsinki (FI)**
- **RUIPPO, Jussi**
**00100 Helsinki (FI)**
- **HÜBSCH, Christian**
**00100 Helsinki (FI)**

(74) Representative: **Hoffmann Eitle**
**Patent- und Rechtsanwälte PartmbB**
**Arabellastraße 30**
**81925 München (DE)**

(56) References cited:
**US-A1- 2014 094 562 US-A1- 2016 333 240**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### FIELD OF THE INVENTION

The present invention relates to a bio-based composite material and to a method for producing a bio-based composite material. Further, the present invention relates to a bio-based composite and to a method for producing the bio-based composite.

### BACKGROUND OF THE INVENTION

A bio-composite is a composite formed by a matrix (resin) and a reinforcement of natural fibers. Environmental aspects and cost of synthetic fibers has promoted the research toward using natural fibers as reinforcement in polymeric composites. The matrix phase may be formed by polymers derived from renewable and nonrenewable resources. In addition to holding the fibers together, the matrix provides the fibers protection against environmental degradation and mechanical damage. Further development of bio-composites is requested for many industrial applications.

### **SUMMARY** OF THE INVENTION.

A bio-based composite material is disclosed.
The bio-based composite material is defined in claim 1.
Further is disclosed a method for producing a bio-based composite material as defined in claim 7.
Further is disclosed a bio-based composite according to claim 12, made by compounding the bio-based composite material as disclosed in the current specification.
Further is disclosed a method for producing a bio-based composite as defined in claim 15.
The method comprises:

- compounding the bio-based composite material as disclosed in the current specification by subjecting the bio-based composite material to moulding while keeping the temperature of the bio-based composite material at 80 - 200 °C.

### DETAILED DESCRIPTION

A bio-based composite material is disclosed. The bio-based composite material comprises sawdust and a resin matrix, based on lignin and tannin, wherein the bio-based composite material comprises sawdust in a total amount of 25 - 90 weight-% based on the total weight of the bio-based composite material.
The bio-based composite material may comprise in addition to sawdust and the resin matrix, water and/or inorganic salt.
In one embodiment, the bio-based composite material consists of sawdust and the resin matrix. In one embodiment, the bio-based composite material consists of sawdust, the resin matrix, and water. In one embodiment, the bio-based composite material consists of sawdust, the resin matrix, and inorganic salt. In one embodiment, the bio-based composite material consists of sawdust, the resin matrix, inorganic salt, and optionally water. In one embodiment, the bio-based composite material consists of sawdust, the resin matrix, inorganic salt, and water.
In one embodiment, the bio-based composite material is formed of the resin matrix that has been sprayed on sawdust with simultaneous mixing to combine the resin matrix with the sawdust.
In line with the invention, the resin matrix is formed by polymerizing lignin and tannin with a crosslinking agent.
In one embodiment, no compound selected from the class of phenols is used for forming the resin matrix. In this specification, unless otherwise stated, the term "compound selected from the class of phenols" should be understood as meaning a fossil-based compound of phenols. I.e. phenols are compounds consisting of a single aromatic ring where to one or more hydroxyls (-OH) are bonded. Such a compound selected from the class of phenols may be e.g. phenol, cresol, or resorcinol.
The inventors surprisingly found out that a fully bio-based resin matrix can be used together with sawdust to produce a bio-based composite material. When using a resin matrix prepared with using both lignin and tannin, which are biopolymers, one is able to provide a resin matrix that may be efficiently mixed with sawdust to provide a bio-based composite material from which a "liquid wood" like composite may be formed. The bio-based composite material has the added utility of curing in the presence of heat without having to use any additional hardener or curing agent.
The sawdust may have an average particle size of 0.001 - 1 mm, or 0.01 - 0.8 mm, or 0.05 - 0.6 mm, or 0.1 - 0.4 mm, or 0.15 - 0.2 mm. The average particle size of the sawdust may be determined by a vibrating sieving method in which different mesh sizes are used (5 sieves, between 1.4 mm - 100 μm mesh size). After vibrating, particles of different size may stay on the sieve, through which they are too large to pass.

The bio-based composite material may comprise sawdust in a total amount of 30 - 88, or 40 - 86 weight-%, or 50 - 84 weight-%, or 60 - 82 weight-%, or 65 - 80 weight-%, or 70 - 78 weight-%, based on the total weight of the bio-based composite material. The bio-based composite material may comprise resin matrix in a total amount of 10 - 75 weight-%, or 12 - 70 weight-%, or 14 - 60 weight-%, or 16 - 50 weight-%, or 18 - 40 weight-%, or 20 - 35 weight-%, or 22 - 30 weight-%, based on the total weight of the bio-based composite material.

Further is disclosed a method for producing a bio-based composite material. The method comprises:

- providing a resin matrix, wherein the resin matrix is formed by polymerizing lignin and tannin with a crosslinking agent to form a resin matrix with a viscosity value of 50 - 1000 mPa·s;
- providing sawdust having a dry matter content of 50 - 100 %;
- spraying the resin matrix on the sawdust with simultaneous mixing to combine the resin matrix with the sawdust,

to form the bio-based composite material, wherein the composite material comprises sawdust in a total amount of 25 - 90 weight-% based on the total weight of the composite material.

The crosslinking agent is an aldehyde, such as formaldehyde or paraformaldehyde. In one embodiment, the aldehyde is prepared from bio-methanol. The aldehyde may thus be of biobased origin. The aldehyde may alternatively be of fossil origin. I.e. produced from a fossil material. In one embodiment, the aldehyde is prepared from methanol.

The method comprises providing sawdust with a dry matter content of 50 - 100 %. In one embodiment, the dry matter content of the provided sawdust is 55 - 95 %, or 60 - 92 %, 70 - 90 %, or 80 - 85 %. The dry matter content may be determined after removing the liquid from a sample followed by drying 1 g of the sample at a temperature of 105 °C for 3 hours. The effectiveness of the drying may be assured by weighing the sample, drying for a further two hours at the specified temperature, and reweighing the sample. If the measured weights are the same, the drying has been complete, and the total weight may be recorded.

The "total weight" should in this specification be understood, unless otherwise stated, as the weight of both the dry matter and the liquid part, e.g. water.

The molar ratio of crosslinking agent to lignin and tannin may be 0.9 - 1.7, or 1.0 - 1.6, or 1.1 - 1.7, or 1.2 - 1.6. In the current specification, the molar ratio (MR) is calculated as follows:

$$MR = n(Fa)/(n(T)+n(L))$$

wherein

n = the amount of substance in moles
Fa = crosslinking agent
T = tannin
L = lignin

The amount of substance in moles are calculated as follows:

$$n = M/m$$

wherein

M = the molar mass of substance in g/mol
m = the mass of substance in grams

The following values are used for the above calculations in this specification:

M(tannin) = 320 g/mol (estimate based on literature and assumed chemical structure)
M(lignin) = 180 g/mol (estimate based on literature and assumed chemical structure)

The weight ratio of tannin to lignin may be 0.05 - 1.0, or 0.1 - 0.43, or 0.15 - 0.33.

In the context of this specification, the term "lignin" may refer to lignin originating from any suitable lignin source. In one embodiment, the lignin is essentially pure lignin. By the expression "essentially pure lignin" should be understood as at least 70 % pure lignin, or at least 90 % pure lignin, or at least 95 % pure lignin, or at least 98 % pure lignin. The essentially pure lignin may comprise at most 30 %, or at most 10 %, or at most 5 %, or at most 2 %, of other components and/or impurities. Extractives and carbohydrates such as hemicelluloses can be mentioned as examples of such other

components.

Further, in the context of this specification, the term "tannin" may refer to tannin originating from any suitable tannin source. In one embodiment, the tannin is essentially pure tannin. By the expression "essentially pure tannin" should be understood as at least 70 % pure tannin, or at least 90 % pure tannin, or at least 95 % pure tannin, or at least 98 % pure tannin. The essentially pure tannin may comprise at most 30 %, or at most 10 %, or at most 5 %, or at most 2 %, of other components and/or impurities.

The lignin may contain less than 30 weight-%, or less than 10 weight-%, or less than 5 weight-%, or less than 3 weight-%, or less than 2.5 weight-%, or less than 2 weight-% of carbohydrates. The tannin may contain less than 20 weight-%, or less than 15 weight-%, or less than 10 weight-% of carbohydrates. The amount of carbohydrates present in lignin or tannin can be measured by high performance anion exchange chromatography with pulsed amperometric detector (HPAE-PAD) in accordance with standard SCAN-CM 71.

The ash percentage of lignin may be less than 7.5 weight-%, or less than 5 weight-%, or less than 3 weight-%, or less than 1.5 weight-%. The ash percentage of tannin may be less than 10 weight-%, or less than 5 weight-%, or less than 3 weight-%. The ash content can be determined in the following manner: Dry solid content of the sample is determined first in an oven at 105°C for 3h. Ceramic crucibles are pre-heated to 700 °C for 1 hour and weight after cooling. A sample (1.5 g - 2.5 g) is weighted into a ceramic crucible. The crucible with a lip is put into a cold oven. Temperature of the oven is raised: 20-200 °C, 30 min => 200-600 °C, 60 min => 600-700 °C, 60 min. Burning is continued without the lid at 700 °C for 60 min. The crucible is let to cool in desiccator and few drops of hydrogen peroxide ($H_2O_2$, 30 %) is added to the sample followed by burning in the oven at 700 °C for 30 minutes. If there are still dark spots in the ash, the hydrogen peroxide treatment and burning is repeated. The crucible is cooled down and weighted. All weigh-in is done with a precision of 0.1 mg and after cooling in a desiccator.

Calculation of the results

$$\text{Ash content } \% = (100\ a \times 100) / (b \times c)$$

wherein

a = weight of the ash, g
b = weight of the sample, g
c = dry solids of the sample, %

Ash content of a sample refers to the mass that remains of the sample after burning and annealing, and it is presented as percentage of the sample's dry content.

In one embodiment, the lignin is technical lignin. In the context of this specification, the term "technical lignin" may refer to lignin that is derived from lignin in any biomass by any technical process. In one embodiment, technical lignin is lignin received from an industrial process.

The lignin used for preparing the resin matrix may be selected from a group consisting of kraft lignin, steam explosion lignin, biorefinery lignin, supercritical separation lignin, hydrolysis lignin, flash precipitated lignin, biomass originating lignin, lignin from alkaline pulping process, lignin from soda process, lignin from organosolv pulping, lignin from alkali process, lignin from enzymatic hydrolysis process, and any combination thereof. In one embodiment, the lignin is wood based lignin. The lignin can originate from softwood, hardwood, annual plants or from any combination thereof.

By "kraft lignin" is to be understood in this specification, unless otherwise stated, lignin that originates from kraft black liquor. Black liquor is an alkaline aqueous solution of lignin residues, hemicellulose, and inorganic chemicals used in a kraft pulping process. The black liquor from the pulping process comprises components originating from different softwood and hardwood species in various proportions. Lignin can be separated from the black liquor by different, techniques including *e.g.* precipitation and filtration. Lignin usually begins precipitating at pH values below 11 - 12. Different pH values can be used in order to precipitate lignin fractions with different properties. These lignin fractions differ from each other by molecular weight distribution, *e.g.* Mw and Mn, polydispersity, hemicellulose and extractive contents. The molar mass of lignin precipitated at a higher pH value is higher than the molar mass of lignin precipitated at a lower pH value. Further, the molecular weight distribution of lignin fraction precipitated at a lower pH value is wider than of lignin fraction precipitated at a higher pH value. The precipitated lignin can be purified from inorganic impurities, hemicellulose and wood extractives using acidic washing steps. Further purification can be achieved by filtration.

The term "flash precipitated lignin" should be understood in this specification as lignin that has been precipitated from black liquor in a continuous process by decreasing the pH of a black liquor flow, under the influence of an over pressure of 200 - 1000 kPa, down to the precipitation level of lignin using a carbon dioxide based acidifying agent, preferably carbon dioxide, and by suddenly releasing the pressure for precipitating lignin. The method for producing flash precipitated lignin is disclosed in patent application FI 20106073. The residence time in the above method is under 300 s. The flash precipitated lignin particles, having a particle diameter of less than 2 μm, form agglomerates, which can be

separated from black liquor using *e.g.* filtration. The advantage of the flash precipitated lignin is its higher reactivity compared to normal kraft lignin. The flash precipitated lignin can be purified and/or activated if needed for the further processing.

The lignin may be derived from an alkali process. The alkali process can begin with liquidizing biomass with strong alkali followed by a neutralization process. After the alkali treatment, the lignin can be precipitated in a similar manner as presented above.

The lignin may be derived from steam explosion. Steam explosion is a pulping and extraction technique that can be applied to wood and other fibrous organic material.

By "biorefinery lignin" is to be understood in this specification, unless otherwise stated, lignin that can be recovered from a refining facility or process where biomass is converted into fuel, chemicals and other materials.

By "supercritical separation lignin" is to be understood in this specification, unless otherwise stated, lignin that can be recovered from biomass using supercritical fluid separation or extraction technique. Supercritical conditions correspond to the temperature and pressure above the critical point for a given substance. In supercritical conditions, distinct liquid and gas phases do not exist. Supercritical water or liquid extraction is a method of decomposing and converting biomass into cellulosic sugar by employing water or liquid under supercritical conditions. The water or liquid, acting as a solvent, extracts sugars from cellulose plant matter and lignin remains as a solid particle.

The lignin may be derived from a hydrolysis process. The lignin derived from the hydrolysis process can be recovered from paper-pulp or wood-chemical processes.

The lignin may originate from an organosolv process. Organosolv is a pulping technique that uses an organic solvent to solubilize lignin and hemicellulose.

In one embodiment, the lignin consists of softwood Kraft lignin. In one embodiment, the lignin is softwood Kraft lignin. In one embodiment, the lignin is a combination of softwood lignin and hardwood lignin.

In one embodiment, at most 30 weight-%, or at most 25 weight-%, or at most 10 weight-%, or at most 5 weight% of the lignin originates from hardwood.

The weight average molecular weight of the softwood Kraft lignin may be 2500 - 9000 Da, or 3000 - 8000 Da, or 3500 - 7000 Da. The lignin, e.g. the Kraft lignin, may have a polydispersity index of 2.9 - 6.0, or 3.0 - 5.0, or 3.2 - 4.5.

The weight average molecular weight may be determined by using gel permeation chromatography (GPC) equipped with UV detector (280nm) in the following manner: A sample is dissolved into 0.1 M NaOH. The sample solution is filtered with 0.45 micron PTFE filter. The measurement is performed in 0.1 M NaOH eluent (0.5 ml/min, T = 30 °C) using PSS MCX precolumn, 1000 Å and 100 000 Å columns, with sulfonated styrene-divinylbenzene copolymer matrix. The molecular weight distribution of the sample is calculated in relation to Na-polystyrene sulfonate standards (6 pieces) Mw 891 - 65400. Values Mw (weight average molecular weight) and Mn (number average molecular weight), polydispersity index (PDI, Mw/Mn) are reported based on two parallel measurements.

The amount of alkali insoluble matter of the softwood Kraft lignin may be below 10 %, or below 5 %, or below 0.5 %. The amount of alkali insoluble matter may be determined in the following manner: Dry solid content of the sample is determined first in an oven at 105°C for 3h. 100 g of sample is dissolved into 277 g NaOH-water solution (pH 12 - 13) at mixed at 50 - 60 °C for 30 min. Solution is filtrated with a Büchner funnel through a glass filter. The residue on the filter is washed with 0.1M NaOH and finally with water. The filter with the residue is dried in an oven and then weighted. The amount of alkali insoluble matter is then calculated as follows:

Alkali insoluble matter, % = [weight of the filter with residue (dryed) (g)- weight of the filter] / [weight of the sample (g) * dry solid content of the samples (%)]

The amount of condensed and syringul groups of softwood Kraft lignin may be below 3.0 mmol/g, or below 2.5 mmol/g, or below 2.0 mmol/g when determined with 31P NMR. The amount of aliphatic OH groups of softwood Kraft lignin may be below 3,0 mmol/g, or below 2.5 mmol/g when determined with 31P NMR. The amount of Guaiacyl OH of softwood Kraft lignin may be at least 1.5 mmol/g when determined with 31P NMR.

The measurements conducted with 31P NMR spectroscopy after phosphitylation can be used for quantitative determination of functional groups (aliphatic and phenolic hydroxyl groups, and carboxylic acid groups). Sample preparation and measurement are performed according to method by Granata and Argyropoulos (Granata, A., Argyropoulos, D., J. Agric. Food Chem. 1995, 43:1538-1544). Accurately weighted sample (~25 mg) is dissolved in N,N-dimethylformamide, and mixed with pyridine and internal standard solution (ISTD) endo-N-Hydroxy-5-norbornene-2,3-dicarboximide (e-HNDI). Phosphitylation reagent (200 μl) 2-chloro-4,4,5,5-tetramethyl-1,3,2-dioxaphopholane is added slowly, and finally a 300 pl $CDCl_3$ is added. NMR measurements are performed immediately after addition of the reagent. Spectra are measured with spectrometer, equipped with a broadband detection optimized probehead.

In one embodiment, the tannin used originates from any wood species. Tannin may originate from e.g. bark or heartwood. Quebracho tree, beech tree, oak tree, chestnut, pine, spruce, and acacia tree species are presented as

examples of possible sources of tannin.

In one embodiment, the tannin used originates from softwood bark. The tannin may be separated from softwood bark of debarking units in sawmills or pulp mills. The separation process can be combined with an ethanol extraction process, a hot water extraction process, a hot steam extraction process or a water-ethanol extraction process of softwood bark.

In one embodiment, the tannin is condensed tannin. Condensed tannin has a high dry content and is therefore suitable to be used in the method as disclosed in the current specification. The dry matter content of condensed tannin may vary between 40 - 100 % and is suitably between 60 - 90 % or between 70 - 80 %. Tannin with such dry matter content can easily be dispersed, whereby a good reactivity with the other reactant components is achieved. The tannin may also be hydrolysable tannin.

The tannin may have a weight average molecular weight (Mw) of 1500 - 5000 Da, or 2000 - 4500 Da, or 2500 - 4000 Da. The tannin may have a polydispersity index of 2.8 - 1.0, or 2.6 - 1.3, or 2.4 - 1.5.

In one embodiment, hexamine is used in preparing the resin matrix. In one embodiment, the resin matrix comprises hexamine. The use of hexamine when preparing the resin matrix has the added utility of providing a stronger structure as the hexamine may be considered to act as a curing agent.

In one embodiment, the resin matrix has a viscosity value of 50 - 1000 mPa·s, or 50 - 250 mPa·s, or 250 - 600 mPa·s. The viscosity can be measured at a temperature of 25 °C by using a rotary viscometer (Digital Brookfield viscometer LVDV-II+ Pro; cone spindle). The inventors surprisingly found out that when the resin matrix has the above viscosity value, e.g. 50 - 250 mPa·s, one is able to mix it evenly with the sawdust by spraying.

Providing the sawdust may comprise mixing sawdust with water. Providing the sawdust may comprise mixing sawdust with water in an amount of 5 - 20 weight-%, or 6 - 10 weight-%, based on the total weight of the provided sawdust.

Providing the sawdust may comprise mixing sawdust with an inorganic salt solution, in an amount of 5 - 20 weight-%, or 6 - 10 weight-%, based on the total weight of the provided sawdust. Chlorides, phosphates, and nitrates may be mentioned as examples of salt types that may be used. Sodium sulfate ($Na_2SO_4$) may be mentioned as one specific example only. Mixing the sawdust with a solution of inorganic salt may reduce electricity of the sawdust whereby the bio-based composite material is easier to handle, and the following compounding can be carried out efficiently. The concentration of the inorganic salt solution may be 1 - 10 weight-%, or 2 - 8 weight-%, or 3 - 6 weight-%.

In one embodiment, the water or the inorganic salt solution is mixed with the sawdust prior to spraying the resin matrix on the sawdust. In one embodiment, the water is mixed with the sawdust prior to spraying the resin matrix on the sawdust. In one embodiment, the inorganic salt solution is mixed with the sawdust prior to spraying the resin matrix on the sawdust.

The inventors surprisingly found out that the viscosity of the resin matrix together with the fact that the resin matrix is sprayed on the sawdust, instead of e.g. being simply blended together, enabled the production of a bio-based composite material that in addition to being formed of bio-based materials may be cured into a bio-based composite by subjecting the same to heating without having to use additional curing agent.

Spraying of the resin matrix on the sawdust is carried out while simultaneous mixing. I.e. mixing of the combination of the sawdust and the resin matrix is carried out at the same time as the resin matrix is sprayed. In one embodiment, the mixing comprises high shear mixing. The mixing, such as high shear mixing, can be carried out at a rotation speed of 360 - 1000 rpm, or 450 - 900 rpm, or 650 - 800 rpm. The high shear mixing may be carried out with e.g. a (conical) mixing vessel with central paddle rotor equipped with impact blades at the top. An example of a high shear mixer is the one under the name Cyclomix™.

The spraying of the resin matrix may be carried out through e.g. a nozzle in order to decompose the resin matrix into droplets that are evenly sprayed or distributed on or over the sawdust.

The spraying may be conducted at a pressure of 0.1 - 5 MPa, or 0.5 - 4 MPa, or 1 - 3 MPa, or 1.5 - 2.5 MPa.

In one embodiment, the formed bio-based composite material is a powder-like material. The bio-based composite material being a powder-like material may be taken to resemble kinetic sand or magic sand. Thus, the bio-based composite material is not in liquid form nor like a dough but a powder-like or sand-like material.

The bio-based composite material has the added utility of having a good stock stability, i.e. it keeps its powder-like physical form when being restored in room temperature conditions.

Thus, further is disclosed a bio-based composite made by compounding the bio-based composite material as disclosed in the current specification.

Compounding is taken in this specification, unless otherwise stated, to describe the process of forming the bio-based composite material into a bio-based composite of a desired shape.

In one embodiment, the visual appearance of the bio-based composite is liquid wood-like. Liquid wood is a bioplastic composed of natural components: lignin, cellulose fibers and some additives. As a thermoplastic, it can be molded and is therefore also called "liquid wood". I.e. liquid wood has a similar composition, appearance, and properties to those of wood, but it can be melted upon heating and molded like a thermoplastic.

The bio-based composite as disclosed in the current specification has the added utility of being a wood-like

material when it comes to its visual appearance but having the mechanical properties similar to traditional thermoset materials or thermoplastics.

The maximum bending stress of the bio-based composite may be 12 - 20 MPa, or 13 - 19 MPa, or 14 - 18 MPa. The maximum bending stress may be determined according to standard ISO 178:2010 (span length 48 mm, testing speed 5 mm/min).

The flexural modulus of the bio-based composite may be 1400 - 2400 MPa, or 1500 - 2300 MPa, or 1600 - 2200 MPa. The flexural modulus may be determined according to standard ISO 178:2010 (span length 48 mm, testing speed 5 mm/min).

These mechanical properties of the bio-based composite show that the formed bio-based composite is mouldable, i.e. it may be compressed into a desired form.

Disclosed is also a method for producing a bio-based composite. The method comprises:

- compounding the bio-based composite material as disclosed in the current specification by subjecting the bio-based composite material to moulding while keeping the temperature of the bio-based composite material at 80 - 200 °C.

In one embodiment, the bio-based composite material is compounded by subjecting the bio-based composite material to moulding while keeping the temperature of the bio-based composite material at 90 - 180 °C, or 100 - 170 °C, or 110 - 160 °C, or 120 - 150 °C, or 130 - 140 °C.

In one embodiment, the moulding is carried out by compression moulding, injection moulding, or extrusion.

In one embodiment, the moulding is carried out under a pressure of 1.2 - 140 MPa, 2 - 120 MPa, or 5 - 100 MPa, or 10 - 90 MPa, or 20 - 80 MPa, or 40 - 70 MPa, or 50 - 60 MPa.

In one embodiment, the moulding is carried out by compression moulding, under a pressure of 1.2 - 140 MPa, 2 - 120 MPa, or 5 - 100 MPa, or 10 - 90 MPa, or 20 - 80 MPa, or 40 - 70 MPa, or 50 - 60 MPa.

In one embodiment, the moulding is carried out by injection moulding under a pressure of 1.2 - 140 MPa, 2 - 120 MPa, or 5 - 100 MPa, or 10 - 90 MPa, or 20 - 80 MPa, or 40 - 70 MPa, or 50 - 60 MPa.

In one embodiment, the moulding is carried out by extrusion under a pressure of 1.2 - 140 MPa (12 - 1400 bar), 2 - 120 MPa, or 5 - 100 MPa, or 10 - 90 MPa, or 20 - 80 MPa, or 40 - 70 MPa, or 50 - 60 MPa.

In one embodiment, the moulding is carried out for 0.5 - 60 minutes, or 1 - 45 minutes, or 5 - 30 minutes.

In one embodiment, no additional curing agent is used for compounding the bio-based composite material.

The bio-based composite material as disclosed in the current specification has the added utility of being formed of a high amount of sawdust. The bio-based composite material has the added utility of having the visual appearance of a wood-like material, while the mechanical properties for many applications are fulfilled.

The method as disclosed in the current specification has the added utility of providing a bio-based composite material that may be used to replace fossil based thermoset materials or thermoplastics. The bio-based composite material and thus the bio-based composite may be produced of 100 % of biological components.

## EXAMPLES

Reference will now be made in detail to the embodiments of the present disclosure.

The description below discloses some embodiments in such a detail that a person skilled in the art is able to utilize the method based on the disclosure. Not all steps of the embodiments are discussed in detail, as many of the steps will be obvious for the person skilled in the art based on this disclosure.

Example 1 - Producing a bio-based composite material

Firstly a resin matrix was provided. The following components and their amounts were used:

| | |
|---|---|
| water 100 % | 27 kg |
| NaOH I 50 % | 9 kg |
| kraft lignin 68 % | 31 kg |
| NaOH II 50 % | 3 kg |
| formaldehyde 40 % | 15 kg |
| NaOH III 50 % | 2.7 kg |
| tannin 40 % (in alkaline solution) | 13 kg |
| NaOH IV 50 % | 1.4 kg |

The percentages of the components (based on total weight and calculated based on the dry matter content) used in this example were the following:

| | |
|---|---|
| NaOH | about 8.0 % |
| kraft lignin | about 21 % |
| tannin | about 5.2 % |
| formaldehyde | about 6.0 % |

The molar ratio of formaldehyde to lignin and tannin was 1.5.

Firstly, water and the NaOH I were mixed at room temperature and heating of the same was started. When the temperature reached 70 °C, lignin was added to the mixture and the mixing and the heating of the same were continued for 30 minutes while keeping the temperature at about 90 °C. Then the temperature of the mixture was allowed to cool to 60 °C, and formaldehyde was added.

Mixing and heating of the formed mixture was continued for 45 minutes at a temperature of about 72 °C. Then NaOH II was added, mixing and heating continued at a temperature of about 70 - 75 °C for 45 minutes. Then NaOH III was added and mixing and heating was continued for 1 hours 15 minutes at a temperature of about 87 - 89 °C. Then NaOH IV was added followed by adding the tannin and the mixing and heating of the same was continued at about 90 oC until the viscosity of the formed mixture reached about 170 - 180 mPa·s (as measured at 25 °C). Then the mixture was cooled to 30 °C.

The formed resin matrix had the following measured properties:

| | |
|---|---|
| Solids, % | 34.7 (3 hours at 105 °C) |
| pH | 13.2 |
| Viscosity, mPa·s | 50 rpm) 250 (R Brookfield RV, 25 °C, |
| Alkalinity, % | 5.1 |
| Free formaldehyde, % | 0.12 |

Then sawdust was provided. 1.5 kg of sawdust (particle size of 125 μm) was mixed with 190 g of sodium sulfate ($Na_2SO_4$) solution (6 %). The moisture content of the provided sawdust was 17 %.

1.35 kg of the sawdust above was moved into a cup of a high shear mixer. 0.15 kg of resin matrix was then sprayed to the cup by using a 1.2 mm spray nozzle with a pressure of 5 bar, while simultaneously mixing the sawdust in high shear mixer at 750 rpm. Mixing was continued until a homogenous mixture was achieved.

Example 2 - Producing a bio-based composite material

In this example a bio-based composite material was produced.

Firstly a resin matrix was provided. The following components and their amounts were used:

| | |
|---|---|
| water 100 % | 27 kg |
| NaOH I 50 % | 9 kg |
| kraft lignin 68 % | 31 kg |
| NaOH II 50 % | 3 kg |
| formaldehyde 40 % | 15 kg |
| NaOH III 50 % | 2.7 kg |
| tannin 40 % (in alkaline solution) | 13 kg |
| NaOH IV 50 % | 1.4 kg |

The percentages of the components (based on total weight and calculated based on the dry matter content) used in this example were the following:

| | |
|---|---|
| NaOH | about 8.0 % |

(continued)

| | |
|---|---|
| kraft lignin | about 21 % |
| tannin | about 5.2 % |
| formaldehyde | about 6.0 % |

The molar ratio of formaldehyde to lignin and tannin was 1.5.

Firstly, water and the NaOH I were mixed at room temperature and heating of the same was started. When the temperature reached 70 °C, lignin was added to the mixture and the mixing and the heating of the same were continued for 30 minutes while keeping the temperature at about 90 °C. Then the temperature of the mixture was allowed to cool to 60 °C, and formaldehyde was added.

Mixing and heating of the formed mixture was continued for 45 minutes at a temperature of about 72 °C. Then NaOH II was added, mixing and heating continued at a temperature of about 70 - 75 °C for 45 minutes. Then NaOH III was added and mixing and heating was continued for 1 hours 15 minutes at a temperature of about 87 - 89 °C. Then NaOH IV was added followed by adding the tannin and the mixing and heating of the same was continued at about 90 oC until the viscosity of the formed mixture reached about 170 - 180 mPa·s (as measured at 25 °C). Then the mixture was cooled to 30 °C. Then 0.4 kg hexamine (100 %) was combined in the mixture.

The formed resin matrix had the following measured properties:

| | |
|---|---|
| Solids, % | 34.8 (3 hours at 105 °C) |
| pH | 13.4 |
| Viscosity, mPa·s | 196 (R Brookfield RV, 25 °C,50 rpm) |
| Alkalinity, % | 5.7 |
| Free formaldehyde, % | 0.15 |

Then sawdust was provided. 1.5 kg of sawdust (particle size of 125 μm) was mixed with 190 g of sodium sulfate ($Na_2SO_4$) solution (6 %). The moisture content of the provided sawdust was 17 %.

Five samples were prepared with different ratios of sawdust and resin matrix. Sawdust was placed into a cup of a high shear mixer. An amount of resin matrix was then sprayed to the cup by using a 1.2 mm spray nozzle with a pressure of 5 bar, while simultaneously mixing the sawdust in high shear mixer at 750 rpm. Mixing was continued until a homogenous mixture was achieved. In table 1 is shown the samples prepared:

Table 1. Prepared samples of bio-based composite materials

| Samples | 1 | | 2 | | 3 | | 4 | | 5 | |
|---|---|---|---|---|---|---|---|---|---|---|
| | kg | % | kg | % | kg | % | kg | % | kg | % |
| Sawdust | 1.35 | 90 | 1.28 | 85 | 1.20 | 80 | 1.13 | 75 | 1.50 | 65 |
| Resi n matrix | 0.15 | 10 | 0.23 | 15 | 0.30 | 20 | 0.38 | 25 | 0.81 | 35 |
| Total | 1.50 | 100 | 1.50 | 100 | 1.50 | 100 | 1.50 | 100 | 2.30 | 100 |

Example 3 - Producing bio-based composite

In this example bio-based composites were produced by using samples 1, 4, and 5 prepared in example 2. Each of the samples were compounded by subjecting the same to compression moulding carried out in a temperature chamber at 120 °C and under a pressure of 3.9 MPa for 20 minutes. During this period of time the temperature of the samples reached 120 °C.

The preparade composites were tested as to their maximum bending stress and flexural modulus. The results are presented in table 2.

Table 2. The maximum bending stress and the flexural modulus of the prepared bio-based composites

| Sample | Maximum bending stress (MPa) | | | Flexural modulus (MPa) | | |
|---|---|---|---|---|---|---|
| 5 | 13,8 | ± | 4,26 | 1580 | ± | 493 |
| 4 | 19,2 | ± | 1,47 | 2340 | ± | 65 |

(continued)

| Sample | Maximum bending stress (MPa) | | | Flexural modulus (MPa) | | |
|---|---|---|---|---|---|---|
| 1 | 13,7 | ± | 0,139 | 2100 | ± | 337 |

From the above results one may see that the mechanical properties of the prepared bio-based composites fulfill the criteria requested in many applications where the prepared bio-based composites may be used.

It is obvious to a person skilled in the art that with the advancement of technology, the basic idea may be implemented in various ways. The embodiments are thus not limited to the examples described above; instead they may vary within the scope of the claims.

The embodiments described hereinbefore may be used in any combination with each other. Several of the embodiments may be combined together to form a further embodiment. A bio-based composite material, a bio-based composite, and a method, as disclosed herein, may comprise at least one of the embodiments described hereinbefore. It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items. The term "comprising" is used in this specification to mean including the feature(s) or act(s) followed thereafter, without excluding the presence of one or more additional features or acts.

## Claims

1. A bio-based composite material comprising sawdust and a resin matrix formed by polymerising lignin and tannin with an aldehyde crosslinking agent, wherein the bio-based composite material comprises sawdust in a total amount of 25 - 90 weight-% based on the total weight of the bio-based composite material.

2. The bio-based composite material of claim 1, wherein the bio-based composite material is formed of the resin matrix that has been sprayed on sawdust with simultaneous mixing to combine the resin matrix with the sawdust.

3. The bio-based composite material of any one of the preceding claims, wherein no compound selected from the class of phenols is used for forming the resin matrix.

4. The bio-based composite material of any one of the preceding claims, wherein the sawdust has an average particle size of 0.001 - 1 mm, or 0.01 - 0.8 mm, or 0.05 - 0.6 mm, or 0.1- 0.4 mm, or 0.15 - 0.2 mm.

5. The bio-based composite material of any one of the preceding claims, wherein the bio-based composite material comprises sawdust in a total amount of 30 - 88, or 40 - 86 weight-%, or 50 - 84 weight-%, or 60 - 82 weight-%, or 65 - 80 weight-%, or 70 - 78 weight-%, based on the total weight of the bio-based composite material.

6. The bio-based composite material of any of the preceding claims, wherein the bio-based composite material comprises resin matrix in a total amount of 10 - 75 weight-%, or 12 - 70 weight-%, or 14 - 60 weight-%, or 16 - 50 weight-%, or 18 - 40 weight-%, or 20 - 35 weight-%, or 22 - 30 weight-%, based on the total weight of the bio-based composite material.

7. A method for producing a bio-based composite material, wherein the method comprises:

   - providing a resin matrix, wherein the resin matrix is formed by polymerizing lignin and tannin with an aldehyde crosslinking agent, to form a resin matrix with a viscosity value of 50
   - 1000 mPa·s;
   - providing sawdust having a dry matter content of 50 - 100 %;
   - spraying the resin matrix on the sawdust with simultaneous mixing to combine the resin matrix with the sawdust,

   to form the bio-based composite material, wherein the composite material comprises sawdust in a total amount of 25 - 90 weight-% based on the total weight of the composite material.

8. The method of claim 7, wherein the resin matrix has a viscosity value of 50 - 250 m Pa·s, or 250 - 600 mPa·s.

9. The method of any one of claims 7-8, wherein providing the sawdust comprises mixing sawdust with an inorganic salt

solution, in an amount of 5 - 20 weight-%, or 6 - 10 weight-%, based on the total weight of the provided sawdust.

**10.** The method of any one of claims 7-9, wherein the dry matter content of the provided sawdust is 55 - 95 %, or 60 - 92 %, 70 - 90 %, or 80 - 85 %.

**11.** A bio-based composite made by compounding the bio-based composite material of any one of claims 1- 6.

**12.** The bio-based composite of claim 11, wherein the visual appearance of bio-based composite is liquid wood-like.

**13.** The bio-based composite of any one of claims 11-12, wherein the maximum bending stress of the bio-based composite is 12 - 20 MPa, or 13 - 19 MPa, or 14 - 18 MPa.

**14.** The bio-based composite of any one of claims 11-13, wherein the flexural modulus of the bio-based composite is 1400 - 2400 MPa, or 1500 - 2300 MPa, or 1600 - 2200 MPa.

**15.** A method for producing a bio-based composite, wherein the method comprises:

- compounding the bio-based composite material of any one of claims 1 - 6 by subjecting the bio-based composite material to moulding while keeping the temperature of the bio-based composite material at 80 - 200 °C.

**16.** The method of claim 15, wherein no additional curing agent is used for compounding the bio-based composite material.

## Patentansprüche

**1.** Biobasiertes Verbundmaterial, umfassend Sägemehl und eine Harzmatrix, die durch Polymerisation von Lignin und Tannin mit einem Aldehyd-Vernetzer gebildet wird, worin das biobasierte Verbundmaterial Sägemehl in einer Gesamtmenge von 25 - 90 Gew.-%, bezogen auf das Gesamtgewicht des biobasierten Verbundmaterials, enthält.

**2.** Biobasiertes Verbundmaterial gemäß Anspruch 1, worin das biobasierte Verbundmaterial aus der Harzmatrix gebildet ist, die unter gleichzeitigem Mischen auf Sägemehl aufgesprüht wurde, um die Harzmatrix mit dem Sägemehl zu verbinden.

**3.** Biobasiertes Verbundmaterial gemäß einem der vorhergehenden Ansprüche, worin keine aus der Klasse der Phenole ausgewählte Verbindung zur Bildung der Harzmatrix verwendet wird.

**4.** Biobasiertes Verbundmaterial gemäß einem der vorhergehenden Ansprüche, worin das Sägemehl eine durchschnittliche Teilchengröße von 0,001 - 1 mm, oder 0,01 - 0,8 mm, oder 0,05 - 0,6 mm, oder 0,1 - 0,4 mm, oder 0,15 - 0,2 mm aufweist.

**5.** Biobasiertes Verbundmaterial gemäß einem der vorhergehenden Ansprüche, worin das biobasierte Verbundmaterial Sägemehl in einer Gesamtmenge von 30 - 88, oder 40 - 86 Gew.-%, oder 50 - 84 Gew.-%, oder 60 - 82 Gew.-%, oder 65 - 80 Gew.-%, oder 70 - 78 Gew.-%, bezogen auf das Gesamtgewicht des biobasierten Verbundmaterials, umfasst.

**6.** Biobasiertes Verbundmaterial gemäß einem der vorhergehenden Ansprüche, worin das biobasierte Verbundmaterial Harzmatrix in einer Gesamtmenge von 10 - 75 Gew.-%, oder 12 - 70 Gew.-%, oder 14 - 60 Gew.-%, oder 16 - 50 Gew.-%, oder 18 - 40 Gew.-%, oder 20 - 35 Gew.-%, oder 22 - 30 Gew.-%, bezogen auf das Gesamtgewicht des biobasierten Verbundmaterials, umfasst.

**7.** Verfahren zur Herstellung eines biobasierten Verbundmaterials, worin das Verfahren umfasst:

- das Bereitstellen einer Harzmatrix, worin die Harzmatrix durch Polymerisation von Lignin und Tannin mit einem Aldehyd-Vernetzungsmittel gebildet ist, um eine Harzmatrix mit einem Viskositätswert von 50 - 1000 mPa·s zu bilden;
- das Bereitstellen von Sägemehl mit einem Trockenmassegehalt von 50 - 100 %;
- das Aufsprühen der Harzmatrix auf das Sägemehl unter gleichzeitigem Mischen, um die Harzmatrix mit dem Sägemehl zu verbinden,

so dass das biobasierte Verbundmaterial gebildet wird, worin das Verbundmaterial Sägemehl in einer Gesamtmenge von 25 - 90 Gew.-%, bezogen auf das Gesamtgewicht des Verbundmaterials, umfasst.

**8.** Verfahren gemäß Anspruch 7, worin die Harzmatrix einen Viskositätswert von 50 - 250 mPa·s, oder 250 - 600 mPa·s aufweist.

**9.** Verfahren gemäß einem der Ansprüche 7-8, worin das Bereitstellen des Sägemehls das Mischen von Sägemehl mit einer anorganischen Salzlösung in einer Menge von 5 - 20 Gew.-%, oder 6 - 10 Gew.-%, bezogen auf das Gesamtgewicht des bereitgestellten Sägemehls, umfasst.

**10.** Verfahren gemäß einem der Ansprüche 7-9, worin der Trockenmassegehalt des bereitgestellten Sägemehls 55 - 95 %, oder 60 - 92 %, 70 - 90 %, oder 80 - 85 % beträgt.

**11.** Biobasiertes Verbundmaterial, hergestellt durch Compoundieren des biobasierten Verbundmaterials gemäß einem der Ansprüche 1 - 6.

**12.** Biobasiertes Verbundmaterial gemäß Anspruch 11, worin das optische Erscheinungsbild des biobasierten Verbundmaterials flüssigem Holz ähnelt.

**13.** Biobasiertes Verbundmaterial gemäß einem der Ansprüche 11-12, worin die maximale Biegespannung des biobasierten Verbundmaterials 12 - 20 MPa, oder 13 - 19 MPa, oder 14 - 18 MPa beträgt.

**14.** Biobasiertes Verbundmaterial gemäß einem der Ansprüche 11-13, worin der Biegemodul des biobasierten Verbundmaterials 1400 - 2400 MPa, oder 1500 - 2300 MPa, oder 1600 - 2200 MPa beträgt.

**15.** Verfahren zur Herstellung eines biobasierten Verbundmaterials, worin das Verfahren umfasst:

- das Compoundieren des biobasierten Verbundmaterials gemäß einem der Ansprüche 1 - 6 durch Formen des biobasierten Verbundmaterials, während die Temperatur des biobasierten Verbundmaterials bei 80 - 200 °C gehalten wird.

**16.** Verfahren gemäß Anspruch 15, worin kein zusätzliches Härtungsmittel zum Compoundieren des biobasierten Verbundmaterials verwendet wird.

## Revendications

**1.** Matériau composite d'origine biologique comprenant de la sciure et une matrice de résine formée par polymérisation de lignine et de tanin avec un agent de réticulation aldéhydique, dans lequel le matériau composite d'origine biologique comprend de la sciure en une quantité totale de 25 à 90 % en poids sur la base du poids total du matériau composite d'origine biologique.

**2.** Matériau composite d'origine biologique selon la revendication 1, dans lequel le matériau composite d'origine biologique est formé de la matrice de résine qui a été pulvérisée sur de la sciure avec mélange simultané pour combiner la matrice de résine avec la sciure.

**3.** Matériau composite d'origine biologique selon l'une quelconque des revendications précédentes, dans lequel aucun composé sélectionné dans la classe des phénols n'est utilisé pour la formation de la matrice de résine.

**4.** Matériau composite d'origine biologique selon l'une quelconque des revendications précédentes, dans lequel la sciure présente une taille moyenne de particules de 0,001 à 1 mm, ou 0,01 à 0,8 mm, ou 0,05 à 0,6 mm, ou 0,1 à 0,4 mm, ou 0,15 à 0,2 mm.

**5.** Matériau composite d'origine biologique selon l'une quelconque des revendications précédentes, dans lequel le matériau composite d'origine biologique comprend de la sciure en une quantité totale de 30 à 88 % en poids, ou 40 à 86 % en poids, ou 50 à 84 % en poids, ou 60 à 82 % en poids, ou 65 à 80 % en poids, ou 70 à 78 % en poids, sur la base du poids total du matériau composite d'origine biologique.

**6.** Matériau composite d'origine biologique selon l'une quelconque des revendications précédentes, dans lequel le matériau composite d'origine biologique comprend une matrice de résine en une quantité totale de 10 à 75 % en poids, ou 12 à 70 % en poids, ou 14 à 60 % en poids, ou 16 à 50 % en poids, ou 18 à 40 % en poids, ou 20 à 35 % en poids, ou 22 à 30 % en poids, sur la base du poids total du matériau composite d'origine biologique.

**7.** Procédé de fabrication d'un matériau composite d'origine biologique, dans lequel le procédé comprend :

- la fourniture d'une matrice de résine, dans lequel la matrice de résine est formée par polymérisation de lignine et de tanin avec un agent de réticulation aldéhydique, pour former une matrice de résine ayant une valeur de viscosité de 50 à 1 000 mPa·s ;
- la fourniture de sciure présentant une teneur en matière sèche de 50 à 100 % ;
- la pulvérisation de la matrice de résine sur la sciure avec mélange simultané pour combiner la matrice de résine avec la sciure, pour former le matériau composite d'origine biologique, dans lequel le matériau composite comprend de la sciure en une quantité totale de 25 à 90 % en poids sur la base du poids total du matériau composite.

**8.** Procédé selon la revendication 7, dans lequel la matrice de résine présente une valeur de viscosité de 50 à 250 mPa·s, ou 250 à 600 mPa·s.

**9.** Procédé selon l'une quelconque des revendications 7 à 8, dans lequel la fourniture de la sciure comprend un mélange de sciure avec une solution de sel inorganique, en une quantité de 5 à 20 % en poids, ou 6 à 10 % en poids, sur la base du poids total de la sciure fournie.

**10.** Procédé selon l'une quelconque des revendications 7 à 9, dans lequel la teneur en matière sèche de la sciure fournie est de 55 à 95 %, ou 60 à 92 %, ou 70 à 90 %, ou 80 à 85 %.

**11.** Composite d'origine biologique réalisé par compoundage du matériau composite d'origine biologique selon l'une quelconque des revendications 1 à 6.

**12.** Composite d'origine biologique selon la revendication 11, dans lequel l'aspect visuel du composite d'origine biologique est semblable à du bois liquide.

**13.** Composite d'origine biologique selon l'une quelconque des revendications 11 à 12, dans lequel la contrainte maximale en flexion du composite d'origine biologique est de 12 à 20 MPa, ou 13 à 19 MPa, ou 14 à 18 MPa.

**14.** Composite d'origine biologique selon l'une quelconque des revendications 11 à 13, dans lequel le module de flexion du composite d'origine biologique est de 1 400 à 2 400 MPa, ou 1 500 à 2 300 MPa, ou 1 600 à 2 200 MPa.

**15.** Procédé de fabrication d'un composite d'origine biologique, dans lequel le procédé comprend :

- le compoundage du matériau composite d'origine biologique selon l'une quelconque des revendications 1 à 6 par soumission du matériau composite d'origine biologique à un moulage tout en maintenant la température du matériau composite d'origine biologique à 80 à 200 °C.

**16.** Procédé selon la revendication 15, dans lequel aucun agent de durcissement supplémentaire n'est utilisé pour le compoundage du matériau composite d'origine biologique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **GRANATA, A.** ; **ARGYROPOULOS, D.** *J. Agric. Food Chem.*, 1995, vol. 43, 1538-1544